# EUROPEAN PATENT SPECIFICATION

(11) **EP 4 001 035 B1**
(45) Date of publication and mention of the grant of the patent: **16.08.2023**
(21) Application number: 20209357.1
(22) Date of filing: 24.11.2020
(51) Int. Cl.: B60T 17/00, B01D 53/26

(54) **DESICCANT CONTAINER, AIR DRYER CARTRIDGE, AIR TREATMENT DEVICE, AND STACKABLE DEVICE**
TROCKENMITTELBEHÄLTER, LUFTTROCKNERKARTUSCHE, LUFTBEHANDLUNGSVORRICHTUNG UND STAPELBARE VORRICHTUNG
RÉCIPIENT DE DÉSHYDRATANT, CARTOUCHE DE DESSICCATION D'AIR, DISPOSITIF DE TRAITEMENT D'AIR ET DISPOSITIF EMPILABLE

(43) Date of publication of application: 25.05.2022
(73) Proprietor: KNORR-BREMSE Systeme für Nutzfahrzeuge GmbH, 80809 München (DE)
(72) Inventor: Oláh, Tibor, 6000 Kecskemét (HU); Tormási, Zoltán, 6000 Kecskemét (HU); Tóth, Zoltán László, 6100 Kiskunfélegyháza (HU); Sajben, Péter, 6034 Helvécia (HU)
(74) Representative: DTS Patent- und Rechtsanwälte Schnekenbühl und Partner mbB

(56) References cited:
- DE-A1-102011 116 520
- US-A- 5 622 544
- US-A1- 2004 094 036

## Description

The present invention relates to a desiccant container for an air dryer cartridge for a vehicle, especially utility vehicle, with at least one container cover; with at least one container body for accommodating at least one desiccant; with at least one pretension device for pretension, in a mounted state, the desiccant internally against the container body and/or the container cover; and with at least one common pre-mounted unit.

Further, the present invention relates to an air dryer cartridge for an air treatment device for a vehicle, especially utility vehicle, with at least one desiccant container as mentioned above, and relates to an air treatment device for a vehicle, especially utility vehicle, with at least one desiccant container as well as with at least one air dryer cartridge as mentioned above, respectively.

Additionally, the present invention relates to a stacking device with at least one first common pre-mounted unit and with at least one second common pre-mounted unit as mentioned above.

In the field of vehicles and especially utility or commercial vehicles, usually pneumatic systems are used for brakes, suspension and other auxiliary systems, and the distribution of the air is handled by a multi-circuit protection valve that can divide the air provided by a compressor or the like, handle the different opening and closing pressures and the pressure limitation of each circuits and the circuit protection.

Before the pressurized air may be controlled this way, an important measure is to dry this air (as it still contains humidity of the atmosphere) provided by the compressor. This drying procedure is established by an air dryer cartridge being arranged between the compressor and the multi-circuit protection valve and providing dried and de-oiled air to the multi-circuit protection valve.

Such conventional air dryer cartridges are already known in the prior art.

DE 3208561 A1 shows an air-drying device having a connection container body on which a cap-shaped container is mounted, which accommodates a drying agent cartridge. For ease of changing the drying agent cartridge, a clamping bracket is used, which is swivellably mounted on the container body and can be swivelled over the container and fixed there.

DE 69210614 T2 discloses an air dryer control system in which the compressed air output of a compressor is dried by one of two air dryers connected in parallel. The purging and drying cycles of the air dryers are alternated by a timing and relay device.

EP 0933117 A1 discloses a shuttle valve for a gas drying system that cleans and dries a stream of unpurified pressurized gas received from a source thereof and supplied to a pneumatic system that uses such a purified pressurized air. The valve includes a container body that connects a drying assembly to a structure that conveys the unpurified pressurized air to the drying assembly.

US 5901464 A relates to a twin tower air drying system for cleaning and drying a stream of unpurified pressurized air including a centrifugal separator having a baffle horizontally disposed therein to generally separate the centrifugal chamber into an upper sub-chamber and a lower sub-chamber; a pair of cavities each containing desiccant media and a purge tube with a flapper valve thereover to close and restrict flow of air through the purge tube when air is flowing upwardly through the cavity, and to open and promote air flow through the purge tube when air is flowing downwardly through the cavity.

US 5961698 A discloses a twin tower gas drying system for cleaning and drying a stream of unpurified pressurized gas received from a source thereof for use of a pneumatic system. The drying system includes a manifold block provided with the plurality of ports. A separator and sump are connected to such a block and to one of the ports for initially separating moisture and particulates from such stream of unpurified gas, and for directing the remainder of the stream to the one port in the block.

DE 10 2011 116 520 A1 describes an air filter cartridge for compressed-air preparation for a compressed-air processing installation.

Basically, the desiccant of all air dryer cartridges needs to be pretensioned as, during the lifetime of the air dryer cartridge, vibrations caused by the powertrain and by the operation of the vehicle generate wear and friction of the desiccant formed by multiple desiccant beads or balls staying in contact to each other. The mentioned vibration-induced friction and wear further cause abrasion and powdering of the desiccant beads resulting an overall volume loss of the desiccant (over a sufficient period of time) that has to be compensated by a tension or pressing force in order to generate stable desiccant conditions of the desiccant. According to the prior art, the desiccant pretension is working as follows: a desiccant cover is pushed downwards against the desiccant with its hole contacting surface by a compression spring supported by the air dryer container body and pressed against it. In the pretensioned state, the cover is mounted to the container body normally via bayonet connection such that all of the desiccant beads were pushed downwards by the desiccant cover (compensation of the abrasion loss) in one pretension direction and the desiccant container then is in its mounted state.

This solution requires a large number of the components and place. Further, a relatively high spring force is needed in order to push the whole area of the desiccant cover downwards contacting the desiccant. As a consequence, mechanical stress in the affected parts is increased.

It is therefore an object of the present invention to improve a desiccant container and an air dryer cartridge as mentioned above, in particular in that they are built up with less parts, weight, and building space and/or in that the assembly time is reduced.

This object is solved according to the present invention with a desiccant container according to the features of claim 1. Correspondingly, a desiccant container for an air dryer cartridge for a vehicle, especially utility vehicle, is provided with at least one container cover; with at least one container body for accommodating at least one desiccant; and with at least one pretension device for pretension, in a mounted state, the desiccant internally against the container body and/or the container cover; wherein the container cover and the pretension device, in a pre-mounted state, are formed as a common pre-mounted unit.

The invention is based on the basic idea that, that the connection between the container cover and the container body is simplified on the one hand by replacing the commonly used bayonet connection with a material connection in the form of an ultrasonic weld. According to the prior art, the desiccant pretension is working as follows: a desiccant cover is pushed downwards against the desiccant with its hole contacting surface by a compression spring supported by the air dryer container body and pressed against it. In the pretensioned state, the cover is mounted to the container body normally via bayonet connection such that all of the desiccant beads were pushed downwards by the desiccant cover (compensation of the abrasion loss) in one pretension direction and the desiccant container then is in its mounted state. In contrast to the prior art, the material connection may not be established in the pretensioned state (where the cover is mounted to the container body) since the welding process needs substantially tension-free mating parts. Therefore, the pretension device according to the invention has to be locked in the pre-mounted state (via the locking device as mentioned above) such that no pretension forces act on the cover as well as the welding connections during the welding process. After the welding process has been terminated, the locking device may be unlocked such that the pretension device changes from its compressed state to its expanded or pretensioned state in order to generate the necessary pretension force to the desiccant.

The pre-mounted state should be understood such that the common pre-mounted unit is still separated from the container body or is already attached to the container body under the condition that the connecting process or welding process is still going on. Accordingly, the mounted state should be understood such that the common pre-mounted unit is rigidly and finally fixed to the container body, i.e. the connecting process is terminated.

Additionally, the common pre-mounted unit comprises at least one locking device for holding, in the pre-mounted state, the pretension device in at least one compressed state. The compressed state of the common pre-mounted unit is very important according to the invention since this state guarantees that the pretension device does not stand in pretension contact with the desiccant during the connection process of the common pre-mounted unit and the container body. As the new connection approach is based on a material connection that has to be established substantially without any pretensions and as the locking device exactly preventing this, is accordingly advantageous with regard to this new connection approach.

Also, the locking device is formed by at least one detachable detent device. This set up is advantageous in that the detachable detent device may be detached non-destructively and manually (or automatically) without the use of special tools resulting in a simple detaching process. On the other hand, the locking device is configured to bring the pretension device again and reversibly in its compressed state although it has still been changed its state into the expanded state for pretension the desiccant. This may be advantageous if the wear state of the desiccant should be investigated or additional desiccant beads could be added via an openable and closable filling hole.

Moreover, the locking device is formed by at least one predetermined breaking point. This is a structurally very simple and cheap construction approach with less parts and construction space together with a safe and reliable functionality. Further, the handling of this construction is very simple such that the mounting, manufacture and assembly effort may be reduced.

Further, the pretension device comprises at least one pretension piston that is axially slidably guided at the container cover. Therefore, a very compact and efficient pretension device is built up since the pretension piston together with the container cover merely constitute two parts. Additionally, this solution is a lightweight approach combined with a defined guiding or bearing approach of the pretension device. Additionally, a pretension spring is arranged between the pretension piston and the container cover, wherein the pretension spring is supported by a corresponding support member of the container cover and the pretension piston, respectively. Consequently, the whole common pre-mounted unit is substantially formed by three parts, namely the pretension piston, the container cover, and the pretension spring resulting in a very compact design according to the advantages as mentioned above.

On the other hand, the pretension piston comprises at least one piston plate and at least one piston guiding section protruding from the piston plate and extending in a direction of the container cover and protruding, in the pre-mounted state, from the container cover. The piston plate and the piston guiding section are arranged coaxially to each other. This coaxial arrangement further increases the guiding performance in terms of definiteness, accuracy and stability (e.g. against tilting or jamming of the pretension piston). Further, this design of the pretension piston results in an advantageous guiding possibility of the pretension piston together with a stiffer configuration. It is also conceivable that the pretension piston together with the piston plate and the piston guiding section is formed integrally.

In addition, in the pre-mounted state, the locking device is formed by the container cover and the pretension piston. As mentioned above, the piston guiding section protrudes from the container cover such that an advantageous and very simple design may be provided thus enabling a simple implementation of the locking device. Additionally, the container cover is easy to access during the assembly process such that the provision of the locking device is also advantageous in terms of an easy mountability, as the locking device has to be unlocked either manually or automatically in order to bring the pretension piston from its compressed state into its expanded state.

Especially, in the pre-mounted state, the pretension piston comprises at least one locking member, and wherein the container cover comprises at least one receiving member for receiving the locking member. This design provides a very simple solution according to how the locking device is actually established, resulting in merely two parts with advantages in terms of construction space, weight and construction and operation safety.

Furthermore, in the pre-mounted state, the pretension piston comprises at least one detent pin, and wherein the container cover comprises at least one detent groove for detachably receiving the detent pin. This design is advantageous in that the detachable detent pin may be detached manually or automatically without the use of special tools resulting in a simple, safe, and reversible detaching process. As this detent device is detachable, consequently it is further configured to bring the pretension device in its compressed state again although it has still been changed its state into the expanded state for pretension the desiccant. Detent devices are also reliable and simple form-fit based pairing technologies transferring these advantages to the present solution of the pretension piston and the container cover. Especially, the detent pin is arranged at this free end of the guiding section of the pretension piston that protrudes from the container cover in the pre-mounted state.

Moreover, in the pre-mounted state, the pretension piston comprises the predetermined breaking point. Since the pretension piston comprises the predetermined breaking point, this predetermined breaking point may be arranged most advantageously at the free end of the guiding section of the piston protruding from the container cover. This solution has the same advantages as discussed above with regard to the locking device being formed by the container cover and the pretension piston in general.

Besides, the common pre-mounted unit, in the mounted state, is connected to the container body by at least one material connection, especially at least one ultrasonic weld. As mentioned above, the inventive solution of connecting the container cover to the container main body or container body, instead of providing a bayonet connection (according to the prior art), is implemented by a material connection. This approach is based on a smaller pretension area of the desiccant container cover as the pretension device has a smaller pretension area compared to an internal area of the container cover facing the desiccant in the mounted state. This smaller pretension area results in less mechanical tensions in the container cover such that the connection between the container cover and the container body may be simplified as an alternative for the bayonet connection, by using the material connection. In general, there a three basic connection types alone or in combination how to connect at least two separate construction parts to each other. The first connection type is a form-fit, wherein the second one is a force- or friction-fit and the third one is the material connection as mentioned above. The solution according to the invention now constitutes a material connection such that the container cover and the container body, once they are connected this way in the mounted, may be separated again merely by destruction. The new solution also provides a simplification of the cover and container body connection as well as a proper fixing and the provision of less parts. Besides, the welded connection may be formed by at least one ultrasonic welded connection. Basically, the container body and the container cover are made of plastic material for which ultrasonic welding is very advantageous. Ultrasonic welding is a very reliable, fast and cheap welding technique on the one hand. Further, ultrasonic welding provides less warping of the parts to be connected resulting in less mechanical tensions in the container body and the container cover. Also, a very stable connection is provided. Alternative material connections such as adhesive bonding or brazing are additionally conceivable.

According to the invention, an air dryer cartridge for an air treatment device for a vehicle, especially utility vehicle, is equipped with at least one desiccant container as mentioned above. Often, air dryer cartridges are set up together with a base comprising several control valves for managing or controlling the air dryer cartridge. Usually, the air dryer cartridge is detachably fastened to this base as the desiccant performance of the desiccant beads decrease over the time and does not last the whole lifetime of the vehicle. Therefore, the air dryer cartridge has to be changed together with the desiccant container from time to time, wherein the design of a detachably mounted air dryer cartridge meets this condition properly. The advantages and technical teachings as discussed with regard to the desiccant container as mentioned above, which is a sub-unit of the air dryer cartridge, are also transferable to the air dryer cartridge accordingly.

According to the invention, an air treatment device for a vehicle, especially utility vehicle, is provided with at least one desiccant container and with at least one air dryer cartridge as mentioned above, respectively. The advantages and technical teachings as discussed with regard to the desiccant container and the air dryer cartridge as mentioned above, which are sub-units of the air treatment device, are also transferable to the air treatment device accordingly.

According to the invention, a stacking device is additionally provided with at least one first common pre-mounted unit comprising the features of the container cover and the pretension device as mentioned above and with at least one second common pre-mounted unit comprising the features of the container cover and the pretension device as mentioned above, wherein the first common pre-mounted unit is stacked upon the second common pre-mounted unit or wherein the second common pre-mounted unit is stacked upon the first common pre-mounted unit. The advantages and technical teachings as discussed above with regard to the common pre-mounted unit (comprising the container cover and the pretension device as mentioned above), which is a sub-unit of the stacking device, are also transferable to the stacking device accordingly.

Further details and advantages of the present invention shall now be disclosed in the embodiments according to the invention in connection with the drawings.

It is shown in
- Fig. 1: a schematic and perspective sectional view of a first embodiment of a desiccant container according to the invention;
- Fig. 2: a schematic and sectional view of a second embodiment of a desiccant container according to the invention; and
- Fig. 3: a schematic and sectional view of a third embodiment of a stacking device according to the invention.

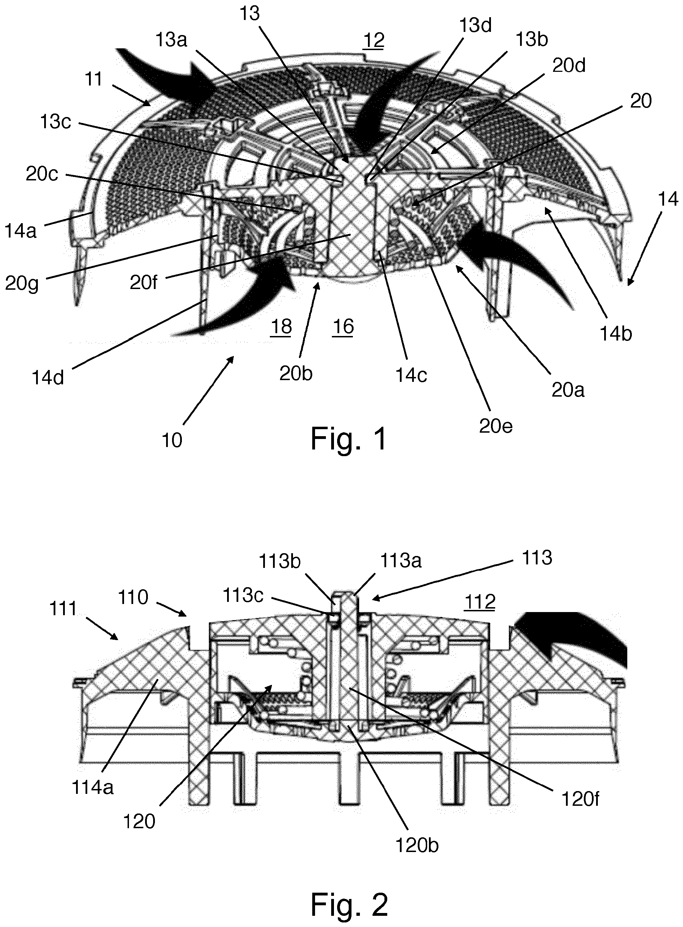

**Fig. 1** shows a schematic and perspective sectional view of a first embodiment of a desiccant container 10 according to the invention.

The desiccant container 10 is also set up for an air dryer cartridge 12 for a utility vehicle (both not shown in Fig. 1).

The desiccant container 10 is accommodated, in a mounted state, within the air dryer cartridge 12.

By means of the cartridge 12, the desiccant container 10 is removably mounted to the air treatment device (not shown in Fig. 1) according to the invention.

The desiccant container 10 comprises a container body 14 forming an accommodation volume 16 for accommodating a desiccant 18.

The desiccant 18 is formed by multiple loose desiccant beads (number of hundreds, thousands, ten thousands etc.) that are hold in space by the desiccant container 10.

Due to the sufficiently small bead size (average bead diameter is ca. 1 mm to ca. 5 or ca. 10 mm), the desiccant 18 has quasi fluid characteristics.

The container body 14 further comprises a container cover 14a.

The container cover 14a is fixedly or detachably mounted to the container body 14 and has substantially the shape of a dome.

The container cover 14a comprises, in the mounted state, an internal cover area 14b facing in a direction of the desiccant 18.

The desiccant container 10 also comprises a pretension device 20 for pretension of the desiccant 18 that is supported at the container cover 14a.

Preferably, the container cover 14a together with the pretension device 20, in the mounted state, is fixedly mounted to the container body 14 by an ultrasonic weld.

The container cover 14a and the pretension device 20, in a pre-mounted state, are formed as a common pre-mounted unit 11.

The common pre-mounted unit 11 comprises a locking device 13 for holding, especially in the pre-mounted state, the pretension device 20 in a compressed state.

A compressed state should be understood such that the pretension device 20, in the mounted or pre-mounted state, is held in a compressed position via the locking device 13 that is still engaged.

Transferred to the mounted state, the pretension device 20, due to its still compressed state, does not completely contact the desiccant such that a gap is established between the pretension device 20 and the desiccant 18 and/or the pretension device 20 does not substantially exert a pretension force upon the desiccant 18.

Accordingly, an expanded state should be understood such that the pretension device 20, only in the mounted state, directly contacts the desiccant 18 via its pretension area 20a such that no gap is established anymore between the pretension device 20 and the desiccant 18 and the pretension device 20 exerts the normal pretension force upon the desiccant 18.

Further, the pretension device 20 comprises a pretension area 20a for pretension, in a mounted state, the desiccant 18 internally against the container body 14 and the container cover 14a.

According to Fig. 1, this pretension area 20a is smaller than the internal cover area 14b.

The pretension device 20 comprises a pretension piston 20b, a spring 20c and a supporting member 20d, wherein the pretension piston 20b is axially slidably guided at the container cover 14a.

The internal cover area 14b may be understood such that it extends within the whole internal surface (also that one of the supporting member 20d) of the container cover 14 that is internally faced or oriented with regard to the desiccant 18.

In a mounted state, the spring 20c is arranged between the pretension piston 20b and the supporting member 20d.

The spring 20c is formed as a double conical or waisted helical compression spring.

The pretension piston 20b comprises a piston plate 20e for directly contacting and pretension the desiccant 18.

The piston plate 20e is formed as a bowl.

Further, the pretension piston 20b comprises piston guiding section 20f centrally protruding from the piston plate 20e and extending, in a mounted state, in a direction of the container cover 14a.

As further can be depicted from Fig. 1, the piston guiding section 20f protrudes, in the pre-mounted state, from the container cover 14a via its free end.

Thus, in the pre-mounted state, the locking device 13 is formed by the container cover 14a and the piston guiding section 20f of the pretension piston 20 in the centre of the container cover 14a.

The piston guiding section 20f, in the pre-mounted state, consequently comprises a locking member 13a and the container cover 14a comprises a receiving member 13b for receiving the locking member 13a.

Alternatively, it is also conceivable that the container cover 14a comprises a locking member 13a and piston guiding section 20f comprises a receiving member 13b for receiving the locking member 13a.

According to the first embodiment, the locking device 13, in the pre-mounted state, is formed by a predetermined breaking point 13c.

The predetermined breaking point 13c may be formed as a groove, notch, hole, long-hole or other forms of recesses or notches.

Consequently, and with regard to Fig. 1, the piston guiding section 20f, in the pre-mounted state, comprises the predetermined breaking point 13c

The predetermined breaking point 13c is formed as a ring-shaped groove 13d at which a ring-shaped receiving member 13b of the container cover 14a is engaged.

Additionally, a predetermined breaking notch may be arranged at the ground of the ring-shaped groove 13d.

Additionally, the piston guiding section 20f and piston plate 20e are arranged coaxially and formed integrally with each other.

Further, the piston guiding section 20f is formed by a solid circular cylinder.

The piston plate 20e further comprises a lateral wall 20g forming a guiding surface for axial guiding the piston plate 20 according to the longitudinal axis of the desiccant container 10.

The lateral wall 20g is formed as a hollow circular cylinder and is integrally connected to the piston plate 20e.

The lateral wall 20g together with the piston plate 20e stay in direct contact to the desiccant 18 und consequently form the pretension area 20a together.

The pretension area 20a may be interpreted as a projected area formed by the sum of the projected areas of the piston plate 20e and the lateral wall 20g, respectively, facing the desiccant 18.

According to Fig. 1, the supporting member 20d receives a first end of the spring 20c, wherein its second end is received by the piston plate 20e.

The supporting member 20d is built by a circular plate is integrally formed with the container cover 14a.

The container cover 14a further comprises a first guiding member 14c and a second guiding member 14d for axially guiding the pretension piston 20b according to a longitudinal axis of the desiccant container 10.

The first guiding member 14c is formed as a circular hollow cylinder and the second guiding member 14d is also formed as a circular hollow cylinder, wherein first and second guiding member 14c, 14d are arranged coaxially.

That is, the first guiding member 14c is radially arranged inside the second guiding member 14d.

The first guiding member 14c is formed such that the whole pretension device 20 is radially accommodated by the second guiding member 14d.

As further can be depicted by Fig. 1, the piston guiding section 20f is accommodated and axially guided by the first guiding member 14c according to the longitudinal axis of the container body 14.

Accordingly, the lateral wall 20g of the pretension piston 20b is accommodated and axially guided by the second guiding member 14d according to the longitudinal axis of the desiccant container 10.

The first and the second guiding member 14c, 14d extending, in a mounted state, from the container cover 14a in a direction of the desiccant 18 and accordingly immerse the desiccant 18 in an axial direction.

The desiccant container 10 is included, in a mounted state, in the air dryer cartridge 12 such that it is formed as an insert being inserted into the air dryer cartridge 12 in the mounted state.

According to the invention, the air dryer cartridge 12 for an air treatment device for a utility vehicle as mentioned above is provided with a desiccant container 10 as mentioned above.

According to the invention, an air treatment device (not shown) for a utility vehicle is further equipped with a desiccant container 10 and with an air dryer cartridge 12 as mentioned above, respectively.

The function of the inventive desiccant container 10 is as follows:
For releasing the locking device 13, the predetermined breaking point 13c of the piston guiding section 20f has to be engaged (the piston portion above the ring shaped groove 13d) in order to destroy the predetermined breaking point 13c in a well-defined manner at the ground of the ring-shaped groove 13d.

As the piston guiding section 20f is pretensioned by the spring 20c, the piston guiding section 20f, together with its ring-shaped groove 13d may axially pass the ring-shaped receiving member 13b in order to change its compressed state into the expanded state.

In the mounted state, an air gab (not shown) between the air dryer cartridge 12 and the desiccant container 10 is provided, by which the pressurized air may flow from the bottom of the cartridge container body to its top where it enters the container cover 14a.

The container cover 14a comprises a plurality of through holes in order to let the air pass through the container cover 14a.

The air then directly flows to the desiccant 18 at the annular space between the second guiding member 14d and the corresponding lateral wall portion of the container body 14.

Additionally, the air centrally flows from the container cover 14a through supporting member 20d to the pretension piston 20b that also has a plurality of through holes in order to let the air flow through the pretension piston 20b into the desiccant 18 as well.

After having welded the container cover 14a to the container body 14 and after releasing the locking device 13, the desiccant 18, in the mounted state, is hold appropriately in space by the pretension piston 20b being pressed directly against or into the desiccant 18 via the pretension force of the spring 20c.

In turn, the spring 20c is supported at the supporting member 20d and thus generates an axial force that presses the pretension piston 20b into the desiccant 18.

As the desiccant beads have a sufficiently small diameter, they behave, as a reaction to a pretension force, as a quasi-fluid.

According to the invention, as the pretension area 20a of the pretension piston 20b is smaller than the internal cover area 14b and due to the quasi-fluidic behaviour of the beads, some of the beads are not just pushed or tensioned in the direction of pretension force.

Accordingly, some desiccant beads at the outer radial regions of the accommodation volume (the second part of the desiccant beads) are pushed into an opposite direction, namely the second direction, against the top of the accommodation volume 16 of the desiccant container 10 at the annular space as mentioned above.

This behaviour enables a overalls and sufficient pretension of all beads although they are not pretensioned according to the whole and possible pretension area of the container cover 14a (see discussion above).

Finally, the air the passes the bottom (also permeable to air) of the accommodation volume 16 and flows then centrally out of the desiccant container 10 and out the air dryer cartridge 12 and then enter into the air treatment device (not shown in Fig. 1).

**Fig. 2** shows a schematic and sectional view of a second embodiment of a desiccant container 110 according to the invention.

The desiccant container 110 according to the second embodiment substantially comprises the same structural and functional features as the desiccant container 10 according to the first embodiment.

Merely the following functional and/or structural differences should be discussed:
Substantially identical technical features of the first and second embodiment are associated to the same reference signs, wherein those distinguishing structural and functional features have a corresponding reference sign being increased by the number 100.

In contrast to the first embodiment, the locking device 113 of the second embodiment is formed by a detachable and reversible detent device 113a.

Comparable to the first embodiment, the detachable detent device 113a is arranged at the free end of the piston guiding section 120f, protruding from the container cover 14a.

The piston guiding section 120f, in the pre-mounted state, comprises a radial detent protrusion or bent pin 113b.

Accordingly, the container cover 14a comprises a correspondingly formed detent groove 113c for detachably receiving the radial detent protrusion or bent pin 113b, which is engaged to the groove 113c by the force of the pretension spring 20c.

For releasing the locking device 113, the pretension piston 20b has to be rotated until the radial detent protrusion or bent pin 113b is aligned with a correspondingly formed through hole (not shown) at the container cover 114a.

As the detent protrusion or bent pin 113b together with the piston guiding section 120f is pretensioned by the spring 20c, the detent protrusion or bent pin 113b may axially pass the through hole in order to change its compressed state into the expanded state.

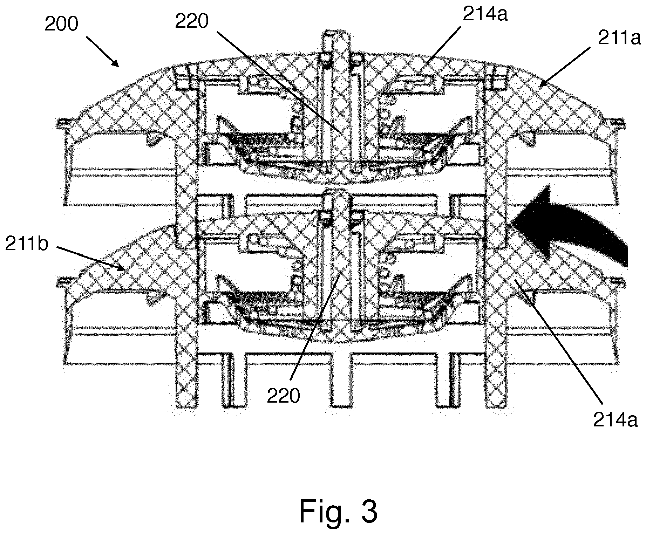

**Fig. 3** shows a schematic and sectional view of a third embodiment of a stacking device 210 according to the invention.

Substantially identical technical features of the third embodiment with regard to the first and second embodiment are associated to the same reference signs, wherein those distinguishing structural and functional features comprise a corresponding reference sign being increased by the number 200.

According to Fig. 3, a stacking device 200 comprises a first common pre-mounted unit 211a, which comprises the features of the container cover 214a and the pretension device 220 according to the first and/or second embodiment.

Further, the stacking device 200 comprises a second common pre-mounted unit 211b, which comprises the features of the container cover 214a and the pretension device 220 according to the first and/or second embodiment.

The first common pre-mounted unit 211a is stacked upon the second common pre-mounted unit 211b.

Alternatively, the second common pre-mounted unit 211b may stacked upon the first common pre-mounted unit 211a.

Fig. 3 exemplarily shows a stacking device 200 with two stacked common pre-mounted units 211a, 211b.

Alternatively, it is conceivable that the stacking device 200 is set up with more than two, i.e. multiple, stacked common pre-mounted units 211a, 211b, e.g. three, four, five, six etc..

The stacking device 200 results in a logistic simplification because the common pre-mounted units 211a, 211b are stackable as depicted by Fig. 3 (reduced space necessity and increased delivery stability).

The arrows and/or arrow parts according to Fig. 1, 2, and 3 that are not associated with a reference sign do not have any contribution to the subject-matter of the desiccant container, 10, 110, the air dryer cartridge 12, 112, the air treatment device, and the staple device 200 according to the present invention, respectively.

### REFERENCE SIGNS

- 10: desiccant container
- 11: common pre-mounted unit
- 12: air dryer cartridge
- 13: locking device
- 13a: locking member
- 13b: receiving member
- 13c: predetermined breaking point
- 13d: ring-shaped groove
- 14: container body
- 14a: container cover
- 14b: an internal cover area
- 14c: first guiding member
- 14d: second guiding member
- 16: accommodation volume
- 18: desiccant
- 20: pretension device
- 20a: pretension area
- 20b: pretension piston
- 20c: pretension spring
- 20d: supporting member
- 20e: piston plate
- 20f: piston guiding section
- 20g: lateral wall

- 110: desiccant container
- 111: common pre-mounted unit
- 112: air dryer cartridge
- 113: locking device
- 113a: detachable detent device
- 113b: radial detent protrusion; pin
- 113c: detent groove
- 114a: container cover
- 120: pretension device
- 120b: pretension piston
- 120f: piston guiding section

- 200: stacking device
- 211a: first common pre-mounted unit
- 211b: second common pre-mounted unit
- 214a: container cover
- 220: pretension device

## Claims

1. A desiccant container (10, 110) for an air dryer cartridge (12, 112) for a vehicle, especially utility vehicle, with at least one container cover (14a, 114a); with at least one container body (14) for accommodating at least one desiccant (18); and with at least one pretension device (20, 120) for pretension, in a mounted state, the desiccant (18) internally against the container body (14) and/or the container cover (14a, 114a); wherein the container cover (14a, 114a) and the pretension device (20, 120), in a pre-mounted state, are formed as a common pre-mounted unit (11, 111),
**characterized in that**
the common pre-mounted unit (11, 111) comprises at least one locking device (13, 113) for holding, in the pre-mounted state, the pretension device (20, 120) in at least one compressed state.

2. The desiccant container (110) according to claim 1,
**characterized in that**
the locking device (113) is formed by at least one detachable detent device (113a).

3. The desiccant container (10) according to claim 1 or claim 2,
**characterized in that**
the locking device (13) is formed by at least one predetermined breaking point (13c).

4. The desiccant container (10, 110) according to one of the preceding claims,
**characterized in that**
the pretension device (20, 120) comprises at least one pretension piston (20b, 120b) that is axially slidably guided at the container cover (14a, 114a).

5. The desiccant container (10, 110) according to claim 4,
**characterized in that**
the pretension piston (20b, 120b) comprises at least one piston plate (20e) and at least one piston guiding section (20f, 120f) protruding from the piston plate (20e) and extending in a direction of the container cover (14a, 114a) and protruding, in the pre-mounted state, from the container cover (14a, 114a).

6. The desiccant container (10, 110) according to claim 4 or claim 5,
**characterized in that,**
in the pre-mounted state, the locking device (13, 113) is formed by the container cover (14a, 114a) and the pretension piston (20b, 120b).

7. The desiccant container (10, 110) according to claim 6,
**characterized in that,**
in the pre-mounted state, the pretension piston (20b, 120b) comprises at least one locking member (13a, 113a), and wherein the container cover (14a, 114a) comprises at least one receiving member (13b, 113b) for receiving the locking member (13a, 113a).

8. The desiccant container (110) according to claim 7,
**characterized in that,**
in the pre-mounted state, the pretension piston (120b) comprises at least one detent pin (113b), and wherein the container cover (114a) comprises at least one detent groove (113c) for detachably receiving the detent pin (113b).

9. The desiccant container (10) according to one of the preceding claims1, 2 and 4 to 8,
**characterized in that**
the locking device (13) is formed by at least one predetermined breaking point (13c), and, in the pre-mounted state, the pretension piston (20b) comprises the predetermined breaking point (13c).

10. The desiccant container (10, 110) according to one of the preceding claims,
**characterized in that**
the common pre-mounted unit (11, 111), in the mounted state, is connected to the container body (14) by at least one material connection, especially at least one ultrasonic weld.

11. An air dryer cartridge (12, 112) for an air treatment device for a vehicle, especially utility vehicle, with at least one desiccant container (10, 110) according to one of the preceding claims.

12. An air treatment device for a vehicle, especially utility vehicle, with at least one air dryer cartridge (12, 112) according to claim11.

13. Stacking device (200) with at least one first common pre-mounted unit (211a) comprising the features of the container cover (14a), the pretension device (20) and the at least one locking device (13) according to one of the preceding claims 1 to 10 and with at least one second common pre-mounted unit (211b) comprising the features of the container cover (14a), the pretension device (20) and the at least one locking device (13) according to one of the preceding claims 1 to 10, wherein the first common pre-mounted unit (211a) is stacked upon the second common pre-mounted unit (211b) or wherein the second common pre-mounted unit (211b) is stacked upon the first common pre-mounted unit (211a), wherein the common pre-mounted unit (11) comprises at least one locking device (13) for holding, in the pre-mounted state, the pretension device (20) in at least one compressed state.

## Patentansprüche

1. Trockenmittelbehälter (10, 110) für eine Lufttrocknerpatrone (12, 112) für ein Fahrzeug, insbesondere ein Nutzfahrzeug, mit mindestens einer Behälterabdeckung (14a, 114a), mit mindestens einem Behälterkörper (14) zur Unterbringung mindestens eines Trockenmittels (18) und mit mindestens einer Vorspannungsvorrichtung (20, 120), um in einem montierten Zustand das Trockenmittel (18) innen gegen den Behälterkörper (14) und/oder die Behälterabdeckung (14a, 114a) vorzuspannen, wobei die Behälterabdeckung (14a, 114a) und die Vorspannungsvorrichtung (20, 120) in einem vormontierten Zustand als eine gemeinsame vormontierte Einheit (11, 111) ausgebildet sind,
**dadurch gekennzeichnet, dass**
die gemeinsame vormontierte Einheit (11, 111) mindestens eine Arretierungsvorrichtung (13, 113) umfasst, um die Vorspannungsvorrichtung (20, 120) in dem vormontierten Zustand in mindestens einem komprimierten Zustand zu halten.

2. Trockenmittelbehälter (10, 110) nach Anspruch 1,
**dadurch gekennzeichnet, dass**
die Arretierungsvorrichtung (113) durch mindestens eine ablösbare Rastvorrichtung (113a) gebildet ist.

3. Trockenmittelbehälter (10, 110) nach Anspruch 1 oder Anspruch 2,
**dadurch gekennzeichnet, dass**
die Arretierungsvorrichtung (13) durch mindestens eine Sollbruchstelle (13c) gebildet ist.

4. Trockenmittelbehälter (10, 110) nach einem der vorhergehenden Ansprüche,
**dadurch gekennzeichnet, dass**
die Vorspannungsvorrichtung (20, 120) mindestens einen Vorspannungskolben (20b, 120b) umfasst, der axial verschiebbar an der Behälterabdeckung (14a, 114a) geführt ist.

5. Trockenmittelbehälter (10, 110) nach Anspruch 4,
**dadurch gekennzeichnet, dass**
der Vorspannungskolben (20b, 120b) mindestens eine Kolbenplatte (20e) und mindestens einen Kolbenführungsabschnitt (20f, 120f) umfasst, der von der Kolbenplatte (20e) vorragt und sich in einer Richtung der Behälterabdeckung (14a, 114a) erstreckt und in dem vormontierten Zustand von der Behälterabdeckung (14a, 114a) vorragt.

6. Trockenmittelbehälter (10, 110) nach Anspruch 4 oder Anspruch 5,
**dadurch gekennzeichnet, dass**
die Arretierungsvorrichtung (13, 113) in dem vormontierten Zustand durch die Behälterabdeckung (14a, 114a) und den Vorspannungskolben (20b, 120b) gebildet ist.

7. Trockenmittelbehälter (10, 110) nach Anspruch 6,
**dadurch gekennzeichnet, dass**
der Vorspannungskolben (20b, 120b) in dem vormontierten Zustand mindestens ein Arretierungsglied (13a, 113a) umfasst und wobei die Behälterabdeckung (14a, 114a) mindestens ein Aufnahmeglied (13b, 113b) zur Aufnahme des Arretierungsglieds (13a, 113a) umfasst.

8. Trockenmittelbehälter (10, 110) nach Anspruch 7,
**dadurch gekennzeichnet, dass**
der Vorspannungskolben (120b) in dem vormontierten Zustand mindestens einen Raststift (113b) umfasst und wobei die Behälterabdeckung (114a) mindestens eine Rastnut (113c) zur lösbaren Aufnahme des Raststifts (113b) umfasst.

9. Trockenmittelbehälter (10, 110) nach einem der vorhergehenden Ansprüche 1, 2 und 4 bis 8,
**dadurch gekennzeichnet, dass**
die Arretierungsvorrichtung (13) durch mindestens eine Sollbruchstelle (13c) gebildet ist und der Vorspannungskolben (20b) in dem vormontierten Zustand die Sollbruchstelle (13c) umfasst.

10. Trockenmittelbehälter (10, 110) nach einem der vorhergehenden Ansprüche, **dadurch gekennzeichnet, dass**
die gemeinsame vormontierte Einheit (11, 111) in dem montierten Zustand über mindestens eine Materialverbindung, insbesondere mindestens eine Ultraschall-Schweißverbindung, mit dem Behälterkörper (14) verbunden ist.

11. Lufttrocknerpatrone (12, 112) für eine Luftaufbereitungsvorrichtung für ein Fahrzeug, insbesondere ein Nutzfahrzeug, mit mindestens einem Trockenmittelbehälter (10, 110) nach einem der vorhergehenden Ansprüche.

12. Luftaufbereitungsvorrichtung für ein Fahrzeug, insbesondere ein Nutzfahrzeug, mit mindestens einer Lufttrocknerpatrone (12, 112) nach Anspruch 11.

13. Stapelvorrichtung (200) mit mindestens einer ersten gemeinsamen vormontierten Einheit (211a), die die Merkmale der Behälterabdeckung (14a), der Vorspannungsvorrichtung (20) und der mindestens einen Arretierungsvorrichtung (13) nach einem der vorhergehenden Ansprüche 1 bis 10 umfasst, und mit mindestens einer zweiten gemeinsamen vormontierten Einheit (211b), die die Merkmale der Behälterabdeckung (14a), der Vorspannungsvorrichtung (20) und der mindestens einen Arretierungsvorrichtung (13) nach einem der vorhergehenden Ansprüche 1 bis 10 umfasst, wobei die erste gemeinsame vormontierte Einheit (211a) auf die zweite gemeinsame vormontierte Einheit (211b) gestapelt ist oder wobei die zweite gemeinsame vormontierte Einheit (211b) auf die erste gemeinsame vormontierte Einheit (211a) gestapelt ist, wobei die gemeinsame vormontierte Einheit (11) mindestens eine Arretierungsvorrichtung (13) umfasst, um die Vorspannungsvorrichtung (20) in dem vormontierten Zustand in mindestens einem komprimierten Zustand zu halten.

## Revendications

1. Récipient (10, 110) de déshydratant pour une cartouche (12, 112) de dessiccation d'air pour un véhicule, en particulier pour un véhicule utilitaire, comprenant au moins un couvercle (14a, 114a) de récipient ; comprenant au moins un corps (14) de récipient pour loger au moins un déshydratant (18) ; et comprenant au moins un dispositif (20, 120) de prétention pour la prétention, à l'état monté, du déshydratant (18), de manière interne contre le corps (14) du récipient et/ou la couvercle (14a, 114a) du récipient ; dans lequel le couvercle (14a, 114a) du récipient et le dispositif (20, 120) de prétention sont, dans un état prémonté, formés en tant qu'une unité (11, 111) prémontée commune,
**caractérisé en ce que**
l'unité (11, 111) prémontée commune comprend au moins un dispositif (13, 113) de verrouillage pour maintenir, dans l'état prémonté, le dispositif (20, 120) de prétention dans au moins un état comprimé.

2. Récipient (110) de déshydratant suivant la revendication 1,
**caractérisé en ce que**
le dispositif (113) de verrouillage est formé par au moins un dispositif (113a) d'encliquetage amovible.

3. Récipient (10) de déshydratant suivant la revendication 1 ou la revendication 2,
**caractérisé en ce que**
le dispositif (13) de verrouillage est formé par au moins un point (13c) de rupture déterminé à l'avance.

4. Récipient (10, 110) de déshydratant suivant l'une des revendications précédentes,
**caractérisé en ce que**
le dispositif (20, 120) de prétention comprend au moins un piston (20b, 120b) de prétention, qui est guidé à coulissement axial sur le couvercle (14a, 114a) du récipient.

5. Récipient (10, 110) de déshydratant suivant la revendication 4,
**caractérisé en ce que**
le piston (20b, 120b) de prétention comprend au moins un plateau (20e) de piston et au moins une partie (20f, 120f) de guidage de piston faisant saillie du plateau (20e) du piston et s'étendant en direction du couvercle (14a, 114a) du récipient et faisant saillie, dans l'état prémonté, du couvercle (14a, 114a) du récipient.

6. Récipient (10, 110) de déshydratant suivant la revendication 4 ou la revendication 5,
**caractérisé en ce que**
dans l'état prémonté, le dispositif (13, 113) de verrouillage est formé par le couvercle (14a, 114a) du récipient et par le piston (20b, 120b) de prétention.

7. Récipient (10, 110) de déshydratant suivant la revendication 6,
**caractérisé en ce que,**
dans l'état prémonté, le piston (20b, 120b) de prétention comprend au moins un élément (13a, 113a) de verrouillage, et dans lequel le couvercle (14a, 114a) du récipient comprend au moins un élément (13b, 113b) de réception pour recevoir l'élément (13a, 113a) de verrouillage.

8. Récipient (110) de déshydratant suivant la revendication 7,
**caractérisé en ce que,**
dans l'état prémonté, le piston (120b) de prétention comprend au moins une goupille (113b) d'encliquetage, et dans lequel le couvercle (114a) du récipient comprend au moins une rainure (113c) d'encliquetage pour recevoir, de manière amovible, la goupille (113b) d'encliquetage.

9. Récipient (10) de déshydratant suivant l'une des revendications 1, 2 et 4 à 8 précédentes,
**caractérisé en ce que**
le dispositif (13) de verrouillage est formé par au moins un point (13c) de rupture déterminé à l'avance et, dans l'état prémonté, le piston (20b) de prétention comprend le point (13c) de rupture déterminé à l'avance.

10. Récipient (10, 110) de déshydratant suivant l'une des revendications précédentes,
**caractérisé en ce que**
l'unité (11, 111) prémontée commune est, dans l'état monté, reliée au corps (14) de récipient par au moins une liaison de matériau, en particulier par au moins une soudure par ultrasons.

11. Cartouche (12, 112) de dessication d'air pour un dispositif de traitement de l'air d'un véhicule, en particulier d'un véhicule utilitaire, comprenant au moins un récipient (10, 110) de déshydratant suivant l'une des revendications précédentes.

12. Dispositif de traitement d'air d'un véhicule, en particulier d'un véhicule utilitaire, comprenant au moins une cartouche (12, 112) de dessication d'air suivant la revendication 11.

13. Dispositif (200) d'empilement comprenant au moins une première unité (211a) prémontée commune, comprenant les particularités du couvercle (14a) de récipient du dispositif (20) de prétention et du au moins un dispositif (13) de verrouillage suivant l'une des revendications 1 à 10 précédentes, et comprenant au moins une deuxième unité (211b) prémontée commune, comprenant les particularités du couvercle (14a) de récipient du dispositif (20) de prétention et du au moins un dispositif (13) de verrouillage suivant l'une des revendications 1 à 10 précédentes, dans lequel la première unité (211a) prémontée commune est empilée sur la deuxième unité (211b) prémontée commune ou dans lequel la deuxième unité (211b) prémontée commune est empilée sur la première unité (211a) prémontée commune, dans lequel l'unité (11) prémontée commune comprend au moins un dispositif (13) de verrouillage pour maintenir, dans l'état prémonté, le dispositif (20) de prétention dans au moins un état comprimé.
